# EUROPEAN PATENT SPECIFICATION

(11) **EP 2 620 707 B1**
(45) Date of publication and mention of the grant of the patent: **16.08.2017**
(21) Application number: 11826355.7
(22) Date of filing: 23.06.2011
(51) Int. Cl.: F23J 15/00

(54) **ENERGY-SAVING DUST COLLECTOR**
STROMSPARENDER STAUBSAMMLER
COLLECTEUR DE POUSSIÈRE À ÉCONOMIE D'ÉNERGIE

(30) Priority: 21.09.2010 CN 201020539491 U
(43) Date of publication of application: 31.07.2013
(73) Proprietor: Shanghai Fubo EP Equipment Co., Ltd., Shanghai 201204 (CN)
(72) Inventor: QIAN, Xuelue, Shanghai 201204 (CN)
(74) Representative: Carpintero Lopez, Francisco
(86) International application number: PCT/CN2011/076210
(87) International publication number: WO 2012/037828

(56) References cited:
- CN-A- 101 073 744
- CN-A- 101 073 744
- CN-U- 201 819 234
- CN-Y- 2 658 693
- CN-Y- 200 954 421
- JP-A- S60 227 845
- US-A1- 2009 078 177

## Description

### Background of the Present Invention

### Technical Field

The present invention involves boiler flue gas dust removal technology, and an energy-saving electrostatic dust collector is put forward to increase the dust removal rate by lowering flue gas temperature.

### Background Art

The flue gas discharged from the boiler contains SO₃ due to the element S in the coal burned in the boiler. The SO₃ not only can form acid rain which will pollute the environment, but also can condense into dew with water vapor when the temperature of flue gas is too low, leading to the equipment corrosion, therefore, the temperature of discharged smoke is generally between 140 °C and 160 °C or even higher. The flue gas temperature has a relatively great impact on the operating performance of electrostatic dust collector. In one aspect, the volume of the flue gas increases as the flue gas temperature rises, increasing the electric field wind speed and lowering dust collection efficiency. In another aspect, the increase of flue gas temperature may lower the spark voltage, which is unfavorable to the dust collection. In addition, the level of flue gas temperature affects the fly ash specific resistance directly. When the flue gas temperature drops, the fly ash specific resistance decreases, improving the dust collection efficiency. In a general heat exchanger device, acid dew corrosion may be incurred by direct heat exchange between flue gas and the heating working medium. Therefore, after being used, the device will definitely be corroded while the flue gas temperature at an inlet of the electrostatic dust collector drops. Thus an apparatus, which not only can lower the flue gas temperature but also can avoid the occurrence of acid dew, is needed.

Currently, boiler flue gas dust removal technology has been widely investigated. The Japanese patent (No.: JPS60227845A) discloses a treating apparatus of exhaust gas, which is proposed to improve the collectivity by providing a temperature control means of exhaust gas on the upstream side of an electrical dust collector, and regulating the heat absorption of the heat retained by boiler exhaust gas in the treating apparatus of exhaust gas.

By the other hand, the American patent (No.: US2009078177A1) describes a method and apparatus for performing flue gas pollution control and/or energy recovery, in which, ash is collected and injected into the flue gas stream at a location upstream of a cooling module, mercury recovery and SO3 removal is facilitated by the cooling process and re-introduction of collected ash, and energy recovered by the cooling of the flue gas may be re-used to heat turbine condensate leading to improved energy efficiency.

The Chinese patent (No.: CN101073744A) discloses an integrating apparatus of magnesium oxide with desulfurizing, dust-collecting and energy-saving functions and its production, wherein, the smoke enters the bag-style dedusting equipment directly after the smoke passes the afterheat reclamation device of the speedy superconducting pipe, thereby the wastage of the bag can be greatly decreased.

### Summary of the Present Invention

The objective of the present invention is to provide an energy-saving electrostatic dust collector to lower the flue gas temperature and improve dust removal efficiency by overcoming above problems in the existing technology.

The present invention adopts the following technical proposals to solve above problems:
The present invention provides an energy-saving electrostatic dust collector according to claim 1.

According to the present invention, the flue gas temperature at the inlet of the electrostatic dust collection device can be controlled to be constant, which is controlled between T+10 °C and the air preheater outlet flue gas temperature Q, thereby the flue gas temperature can be lowered maximally to recycle the flue gas waste heat on the basis of avoiding acid dew corrosion.

According to the present invention, the heat absorption section may consist of finned tubes filled with working medium water.

According to the present invention, the electrostatic dust collection device may comprise multiple dust collection electric fields.

Through the above technical solution, with utilizing controllability and adjustability of the apparatus wall temperature, acid dew corrosion is prevented from occurring by adding a heat exchanger to the energy-saving electrostatic dust collector of the present invention to absorb flue gas waste heat and lower the flue gas temperature, so the electrostatic dust collection device can achieve a good running condition and the dust collection efficiency can be improved. For electric dust collection, the dust collection performance will be improved as a result of the decreasing of the flue gas temperature and the declining of the flue gas volume and the ash specific resistance. If the flue gas temperature has certain temperature drop space, the higher efficiency of dust collector with more electric fields can be achieved by adopting less electric fields, so the investment costs can be reduced.

### Description of the Drawing

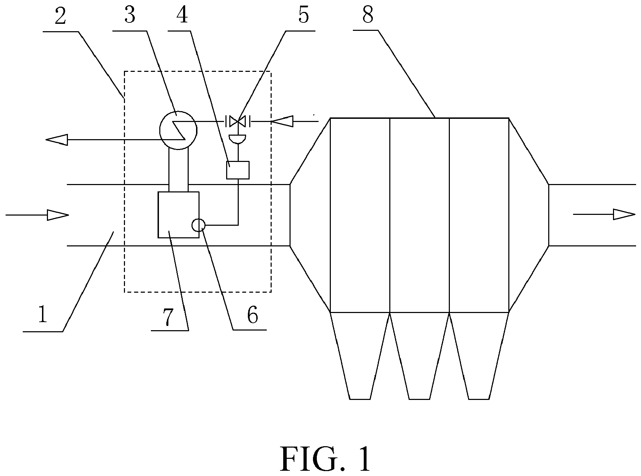

Fig.1 is a structure diagram of an energy-saving electrostatic dust collector of the present invention.

### Detailed Description of the Preferred Embodiment

As shown in Fig.1, the present invention-an energy-saving electrostatic dust collector, which includes an electrostatic dust collection device 8 connected to the flue 1 and the fume afterheat recycling device 2. The fume afterheat recycling device 2 is disposed in the flue on the front of the dust collection device 8. The fume afterheat recycling device 2 includes a heat exchanger. The heat exchanger includes a heat absorption section 7 and a heat radiating section 3 connected to the heat absorption section. The heat absorption section 7 is located at the flue gas inlet of the dust collection device 8. The heat absorption section and the heat radiating section of the heat exchanger are connected through a vapor pipe and a water return pipe and the heat radiating section is positioned higher than the heat absorption section. The heat absorption section 7 is consisted of multiple finned tubes filled with working medium water. The finned tubes absorb the heat of the flue gas to transform the water into water vapor, thereby lowering the temperature of the flue gas. The heat radiating section 3 is connected to a condensed-water pipe. In the heat radiating section 3, the condensed water absorbs heat, resulting in the condensation of water vapor from the heat absorption section into water and looping back.

The present invention also includes an automatic control apparatus 4 to adjust the flow rate of condensed water in the heat radiating section and the wall temperature of the heat absorption section. The automatic control apparatus 4 is connected to the condensed water pipe through an electric control valve 5, and then connected to the heat radiating section 3 of the heat exchanger. The automatic control apparatus 4 measures the inner wall temperature of the heat absorption section 7 through a temperature sensor 6, and controls the flow rate of the condensed water in the condensed water pipe, thereby controlling the temperature by adjusting the flow rate of the condensed water.

The flue gas first passes the heat absorption section 7 of the heat exchanger and the flue gas temperature drops after the heat exchanger absorbs the flue gas waste heat. The absorbed waste heat is transferred to circulating water or vapor as latent heat. After heat exchange with the condensed water in the heat radiating section 3,the circulating water is supplied to systems which need heat, such as wet-desulfurization flue gas reheating system ,condensed-water heating system, heat supply system. When the temperature of the flue gas entering the electrostatic dust collector is too high (far higher than the acid dew point), the automatic control apparatus 4 adjusts the electric control valve 5 to increase the heat transfer amount of the heat radiating section 3, leading to the increase of the temperature-pressure between the heat transfer medium and the flue gas in the heat absorption section 7, along with the increase of the heat transfer between the waste heat absorption section and the flue gas, then the flue gas temperature drops naturally.

In general, the temperature of discharged flue gas from the boiler is generally about 150 °C , so that the back-end heated surface of the boiler is not corroded by acid dew. But for a boiler which runs for a relatively long time, the temperature will be even higher. Then, the flue gas enters the heat absorption section of the heat exchanger. A wall temperature value, which is higher than the flue gas acid dew point, is set by the automatic control apparatus. At this time, the flue gas temperature at the outlet of the heat absorption section, namely, the flue gas temperature at the inlet of the electrostatic dust collection device, is between T+10 °C and the flue gas temperature Q at the outlet of the air preheater. The value of the acid dew point T differs with the change of the boiler fuel. Normally, the value of T is about 100 °C .The flue gas temperature at the inlet of the electrostatic dust collection device is adjusted automatically by controlling the condensed-water system through the automatic control apparatus, so that the inlet flue gas temperature can be maintained at a constant value. Therefore, the running temperature of the electrostatic dust collection device is between T+10 °C and Q.Thus the present invention can recycle the flue gas waste heat and lower the flue gas temperature maximally on the basis of avoiding acid dew corrosion, then the dust collection efficiency of the electrostatic dust collector improves greatly.

When the flue gas temperature drops, the dust collection efficiency of the electrostatic dust collector is improved. So on the premise that the national emission standard is met, one or some of the dust collection electric fields can be shut down. For a new project, the degree of flue gas temperature drop should be taken into consideration during the design of the dust collection device. The number of electric fields can be reduced properly to save the cost investment when the efficiency of dust collection is satisfied.

## Claims

1. Energy-saving electrostatic dust collector comprising an electrostatic dust collection device (8) connected to the flue (1), a fume afterheat recycling device (2) disposed in the flue on the front of the dust collection device (8), and an automatic control apparatus (4), wherein the fume afterheat recycling device (2) comprises a heat exchanger which comprises a heat absorption section (7) and a heat radiating section (3) connected to the heat absorption section (7), the heat absorption section (7) being located at the flue gas inlet of the dust collection device (8), the heat radiating section (3) is connected to a condensed water pipe, and the flue gas temperature at the flue gas inlet of the dust collection device (8) is controllable and higher than the acid dew point T of the flue gas,
wherein the heat absorption section (7) and the heat radiating section (3) of the heat exchanger are connected with each other through a vapor pipe and a water return pipe, and the heat radiating section (3) is positioned higher than the heat absorption section (7),
**characterised by** a temperature sensor (6) disposed on the heat absorption section (7) and connected to the automatic control apparatus (4), and by an electric control valve (5) disposed on the condensed-water pipe connected to the heat radiating section (3), the electric control valve (5) being connected to the automatic control apparatus (4),
the automation control apparatus (4) measuring the inner wall temperature of the heat absorption section (7) through the temperature sensor (6) and controlling the flow rate of the condensed water in the condensed water pipe, thereby controlling said temperature by adjusting the flow rate of the condensed water by means of the electric control valve (5).

2. The energy-saving electrostatic dust collector as described in claim 1, wherein the heat absorption section (7) consists of finned tubes filled with working medium water.

3. The energy-saving electrostatic dust collector as described in claim 1, wherein the dust collection device (8) comprises multiple dust collection electric fields.

## Patentansprüche

1. Energiesparender elektrostatischer Staubabscheider, umfassend eine mit dem Rauchgasabzug (1) verbundene elektrostatische Staubabscheidungsvorrichtung (8),
eine im Rauchgasabzug vor der Staubabscheidungsvorrichtung (8) angeordnete Rauchnachwärme-Rückgewinnungsvorrichtung (2) und ein automatisches Steuergerät (4),
wobei die Rauchnachwärme-Rückgewinnungsvorrichtung (2) einen Wärmetauscher umfasst, der einen Wärmeabsorptionsabschnitt (7) und einen mit dem Wärmeabsorptionsabschnitt (7) verbundenen Wärmestrahlungsabschnitt (3) umfasst, wobei der Wärmeabsorptionsabschnitt (7) am Rauchgaseinlass der Staubabscheidungsvorrichtung (8) angeordnet ist, der Wärmestrahlungsabschnitt (3) mit einer Kondenswasserleitung verbunden ist und die Rauchgastemperatur am Rauchgaseinlass der Staubabscheidungsvorrichtung (8) steuerbar und höher als der Säuretaupunkt T des Rauchgases ist,
wobei der Wärmeabsorptionsabschnitt (7) und der Wärmestrahlungsabschnitt (3) des Wärmetauschers über eine Dampfleitung und eine Wasserrückleitung miteinander verbunden sind und der Wärmestrahlungsabschnitt (3) höher als der Wärmeabsorptionsabschnitt (7) positioniert ist,
**gekennzeichnet durch**
einen am Wärmeabsorptionsabschnitt (7) angeordneten und mit dem automatischen Steuergerät (4) verbundenen Temperatursensor (6), und durch ein an der mit dem Wärmestrahlungsabschnitt (3) verbundenen Kondenswasserleitung angeordnetes elektrisches Steuerventil (5), wobei das elektrische Steuerventil (5) mit dem automatischen Steuergerät (4) verbunden ist,
wobei das Automationssteuergerät (4) durch den Temperatursensor (6) die Innenwandtemperatur des Wärmeabsorptionsabschnitts (7) misst und die Strömungsrate des Kondenswassers in der Kondenswasserleitung steuert, wodurch die Temperatur durch Einstellen der Strömungsrate des Kondenswassers mithilfe des elektrischen Steuerventils (5) gesteuert wird.

2. Energiesparender elektrostatischer Staubabscheider nach Anspruch 1, wobei der Wärmeabsorptionsabschnitt (7) aus mit Wasser als Arbeitsmedium gefüllten Rippenrohren besteht.

3. Energiesparender elektrostatischer Staubabscheider nach Anspruch 1, wobei die Staubabscheidungsvorrichtung (8) mehrere elektrische Staubabscheidungsfelder umfasst.

## Revendications

1. Collecteur de poussière électrostatique à économie d'énergie comprenant un dispositif de collecte de poussière électrostatique (8) raccordé au carneau (1), un dispositif de recyclage de chaleur résiduelle de fumées (2) disposé dans le carneau à l'avant du dispositif de collecte de poussière (8), et un appareil de commande automatique (4),
dans lequel le dispositif de recyclage de chaleur résiduelle de fumées (2) comprend un échangeur de chaleur qui comprend une section d'absorption de chaleur (7) et une section de rayonnement de chaleur (3) raccordée à la section d'absorption de chaleur (7), la section d'absorption de chaleur (7) étant située au niveau de l'orifice d'entrée de gaz de carneau du dispositif de collecte de poussière (8), la section de rayonnement de chaleur (3) est raccordée à un tuyau d'eau condensée, et la température de gaz de carneau au niveau de l'orifice d'entrée de gaz de carneau du dispositif de collecte de poussière (8) est régulable et plus élevée que le point de rosée acide T du gaz de carneau,
dans lequel la section d'absorption de chaleur (7) et la section de rayonnement de chaleur (3) de l'échangeur de chaleur sont raccordées l'une à l'autre par l'intermédiaire d'un tuyau de vapeur et d'un tuyau de retour d'eau, et la section de rayonnement de chaleur (3) est positionnée plus haute que la section d'absorption de chaleur (7),
**caractérisé par**
un capteur de température (6) disposé sur la section d'absorption de chaleur (7) et raccordé à l'appareil de commande automatique (4), et par une vanne de commande électrique (5) disposée sur le tuyau d'eau condensée raccordé à la section de rayonnement de chaleur (3), la vanne de commande électrique (5) étant raccordée à l'appareil de commande automatique (4),
l'appareil de commande automatique (4) mesurant la température de paroi interne de la section d'absorption de chaleur (7) par l'intermédiaire du capteur de température (6) et régulant le débit de l'eau condensée dans le tuyau d'eau condensée, régulant ainsi ladite température en ajustant le débit de l'eau condensée au moyen de la vanne de commande électrique (5).

2. Collecteur de poussière électrostatique à économie d'énergie selon la revendication 1, dans lequel la section d'absorption de chaleur (7) est constituée de tubes à ailettes remplis d'eau fluide moteur.

3. Collecteur de poussière électrostatique à économie d'énergie selon la revendication 1, dans lequel le dispositif de collecte de poussière (8) comprend de multiples champs électriques de collecte de poussière.
